# EUROPÄISCHE PATENTSCHRIFT

(11) **EP 0 978 092 B1**
(45) Veröffentlichungstag und Bekanntmachung des Hinweises auf die Patenterteilung: **27.11.2002**
(21) Anmeldenummer: 97931665.0
(22) Anmeldetag: 26.06.1997
(51) Int. Cl.: G06K 19/077

(54) **TRAGBARE DATENÜBERTRAGUNGSVORRICHTUNG UND BEFESTIGUNGSELEMENT**
PORTABLE DATA TRANSMISSION DEVICE AND FASTENING ELEMENT
DISPOSITIF PORTABLE DE TRANSFERT DE DONNEES ET ELEMENT DE FIXATION

(30) Priorität: 18.07.1996 DE 19629086
(43) Veröffentlichungstag der Anmeldung: 09.02.2000
(73) Patentinhaber: Infineon Technologies AG, 81669 München (DE)
(72) Erfinder: FRIES, Manfred, D-94336 Hunderdorf (DE)
(74) Vertreter: Epping Hermann & Fischer
(86) Internationale Anmeldenummer: DE9701336
(87) Internationale Veröffentlichungsnummer: WO98003936

(56) Entgegenhaltungen:
- EP-A- 0 691 625
- WO-A-95/14980
- DE-A- 4 401 089

## Beschreibung

Die Erfindung bezieht sich auf eine tragbare Datenübertragungsvorrichtung nach dem Oberbegriff des Anspruches 1 und auf ein Befestigungselement zur Abstützung eines Koppelelementes für einen Datenträger nach dem Oberbegriff des Anspruches 8.

Die Anwendungsmöglichkeiten von in der Regel im Scheckkartenformat ausgebildeten Chipkarten sind aufgrund einer hohen funktionalen Flexibilität äußerst vielseitig geworden und nehmen mit der steigenden Rechnerleistung und Speicherkapazität der verfügbaren integrierten Schaltungen weiterhin zu. Neben den derzeit typischen Anwendungsfeldern solcher Chipkarten in der Form von Krankenversichertenkarten, Gleitzeiterfassungskarten, Telefonkarten und dergleichen ergeben sich zukünftig insbesondere Anwendungen im elektronischen Zahlungsverkehr, bei der Zugriffskontrolle auf Rechner, bei geschützten Datenspeichern und so weiter. Hinsichtlich der Art der Kopplung an ein Terminal bzw. eine Lese-Schreibstation unterscheidet man kontaktbehaftete Chipkarten und sogenannte kontaktlose Chipkarten. Bei einer kontaktbehafteten Chipkarte erfolgt die Kontaktierung durch ein metallisches Kontaktfeld mit üblicherweise nach einem ISO-Standard normierter Kontaktflächen. Daneben gibt es kontaktlose Chipkarten, die neben technischen Vorteilen gegenüber der kontaktbehafteten Chipkarte darüber hinaus eine Reihe interessanter neuer Möglichkeiten in der Anwendung für den Kartenherausgeber und den Kartenmitbenutzer bieten. So müssen kontaktlose Chipkarten zum Beispiel nicht unbedingt in einen Kartenleser eingesteckt werden, sondern es gibt Systeme, die über eine Entfernung von einigen Metern funktionieren. Ein breites Anwendungsgebiet stellt beispielsweise der öffentliche Personennahverkehr dar, wo in möglichst kurzer Zeit möglichst viele Personen erfaßt werden müssen. Neben weiteren Vorteilen bietet die kontaktlose Chipkarte den Vorzug, daß keine technischen Elemente an der Kartenoberfläche sichtbar sind, so daß die optische Gestaltung der Kartenoberfläche nicht durch Magnetstreifen oder Kontaktflächen eingeschränkt wird. Die Nachteile bei den derzeit verfügbaren kontaktlosen Chipkarten liegen vor allem in den zusätzlichen Bauelementen wie Übertragungsspulen oder Kondensatorplatten, die in die Karte zu integrieren sind. Darüber hinaus ist die in der kontaktlosen Chipkarte erforderliche Elektronik zur kontaktlosen Übertragung von elektrischen Signalen an die Lese-Schreibstation aufwendiger. Im Prinzip geeignet hierfür sind Schaltungen, die eine Signalübertragung mittels Mikrowellen, optischer Signale, kapazitiver oder induktiver Kopplung ermöglichen, wobei sich wegen der flachen Bauform der Chipkarte am ehesten die kapazitive und die induktive Kopplung eignen. Derzeit erfolgt bei den meisten kontaktlosen Karten die Übertragung auf induktivem Wege, mit dem sich sowohl die Daten wie auch die Energieübertragung realisieren lassen. So sind im Kartenkörper eine oder mehrere Induktionsspulen integriert ausgebildet, die auf geeignete Weise mit der auf dem Halbleiterchip befindlichen Schaltung kontaktiert sind. Die Übertragung von elektrischen Signalen erfolgt nach dem Prinzip des lose gekoppelten Transformators, wobei die Trägerfrequenz beispielsweise im Bereich zwischen 100 und 300 kHz oder bei einigen MHz, insbesondere der Industriefrequenz von 13,56 MHz liegt. Hierfür werden Induktionsspulen mit einem gegenüber der Grundfläche des Halbleiterchips von in der Größenordnung etwa 10 mm² wesentlich größeren Spulenflächen von typischerweise etwa 30 bis 40 cm² benötigt, wobei die Induktionsspule in der Regel nur wenige Windungen aufweist und flach ausgebildet ist. In der Regel werden die Halbleiterbauelemente in Form von vorgefertigten Modulen oder direkt als Chip auf die geätzte Spule montiert. Anschließend wird das als separates Bauteil vorliegende Chipmodul samt der Induktionsspule zur Fertigstellung der Chipkarte in den Kartenkörper einlaminiert, wobei für den Volumenausgleich beim Laminieren gegebenenfalls mit Ausstanzungen versehene Zwischenfolien als Inlettfolien eingebracht werden. Den denkbar möglichen Anordnungen und Ausbildungen der Induktionsspule sind zum einen durch die vorgegebene maximale Bauhöhe von etwa 840 µm einer ISO-Chipkarte und zum anderen aufgrund der vorgegebenen Biegeeigenschaften nach ISO-Standard Grenzen gesetzt, und damit der maximal erreichbaren magnetischen Flußdichte. Ein wichtiger Parameter bei kontaktlosen Chipkarten stellt hierbei die Reichweite dar, d.h. der maximale Abstand zwischen Chipkarte und Lese-Schreibstation, innerhalb dessen die Datenübertragung noch einwandfrei funktioniert. Abgesehen von den Eigenschaften der Lese-Schreibstation hängt die maximal mögliche Reichweite vor allem von der Anpassung der Induktionsspule innerhalb der Chipkarte im Verhältnis zum Halbleiterchip und von der wirksamen Fläche der als Antenne arbeitenden Induktionsspule ab, wobei die Spulenfläche naturgemäß aufgrund der vorgegebenen Chipkartengröße limitiert ist.

Aus der EP-A-0 691 625 ist eine tragbare Radiofrequenz-Umhüllung für eine Chipkarte entsprechend dem Oberbegriff des Anspruches 1 bekannt geworden, welche Umhüllung eine batteriegespeiste Mikrocontrollerschaltung eingearbeitet besitzt, mit welcher die kontaktlose Übertragung von Daten aus der Chipkarte zu einem Lesegerät bewerkstelligt werden kann. Der Datenaustausch von der Chipkarte zu der in der Umhüllung vorgesehenen Mikrocontrollerschaltung erfolgt kapazitiv über Kondensatorplatten, die Spannungsversorgung der Chipkarte erfolgt über eine in der Umhüllung vorgesehene induktive Treiberschaltung, welche auch über einen Ferritkern verfügt.

Aus der DE-A-44 01 089 ist eine Schutzhülle für kontaktlose Chipkarten bekannt geworden, bei der die Chipkarte von einer flachen, insbesondere rechteckigen Hülle umgeben ist, und zumindest ein Teilbereich der die Karte umgebenden Flächen elektrisch leitend ist. Mit der Schutzhülle wird es ermöglicht, kontaktlose Chipkarten vor einem nichtautorisierten Zugriff zu schützen.

Der vorliegenden Erfindung liegt die Aufgabe zugrunde, eine Anordnung für eine kontaktlose Chipkarte zur Verfügung zu stellen, mit welcher die Lese- oder Schreibsicherheit bei Vorbeiführen der kontaktlosen Chipkarte an der Lese-Schreibstation verbessert, und der maximal mögliche Lese- oder Schreibabstand erhöht werden kann.

Diese Aufgabe wird durch eine tragbare Datenübertragungsvorrichtung gemäß Anspruch 1 und ein Befestigungselement gemäß Anspruch 8 gelöst.

Erfindungsgemäß ist vorgesehen, daß der Datenträger eine kontaktlose Chipkarte mit einer im Kartenkörper der Chipkarte integriert ausgebildeten Induktionsspule darstellt, die mit der elektronischen Schaltung elektrisch verbunden ist, und das Koppelelement ein der Induktionsspule zugeordnetes magnetisches Material aufweist. Das magnetische Material kann ein in das Befestigungselement eingearbeitetes Ferritmaterial als Vollkörper darstellen, wobei neben den klassischen Ferritmaterialien auch sonstig geeignete Magnetwerkstoffe zum Einsatz gelangen können, beispielsweise Magnetstoffe der Seltenen Erden wie beispielsweise Bariumtitanat und dergleichen. Bei der Verwendung solcher Ferrite zur Erhöhung der magnetischen Flußdichte der in der Chipkarte untergebrachten Induktionsspule ist man nach dem erfindungsgemäßen Prinzip nach nicht an die bei der eigentlichen Chipkarte in jedem Fall zu erfüllenden ISO-Vorgaben hinsichtlich der Biegeeigenschaften gebunden; demgegenüber sind bei einem Einbringen von Ferritmaterialien unmittelbar in die Karte die erforderlichen ISO-Biegetests-Vorgaben in aller Regel nicht zu erreichen.

Die Erfindung ermöglicht eine Reihe von Vorteilen gegenüber den vorbekannten kontaktlosen Chipkarten. Zum einen kann ein die Antennenwirkung bei der kontaktlosen Übertragung der elektrischen Signale an die Lese-Schreibstation verstärkende Koppelelement unabhängig von den baulichen Vorgaben der Chipkarte im Hinblick auf einen möglichst großen Lese- oder Schreibabstand optimiert werden. So kann die Bauhöhe des Koppelelementes beispielsweise bis zu mehreren Millimeter betragen, was den Einsatz von Ferritmaterial als Koppelelement eröffnet, wodurch beispielsweise bei der kontaktlosen Zutrittskontrolle eines Benutzers die Lesesicherheit verbessert und der maximale Leseabstand deutlich erhöht werden kann. Zum anderen kann das Befestigungselement mit dem Koppelelement beliebig oft verwendet werden und beispielsweise nach einem Verwurf der Chipkarte erneut zum Einsatz gelangen.

Bei einer bevorzugten Ausführung der Erfindung kann vorgesehen sein, daß das Befestigungselement als Umhüllung für den Datenträger ausgebildet ist, und den Datenträger wenigstens teilweise aufnimmt. Die Umhüllung kann hierbei in jedem Fall als Schutz für die kontaktlose Chipkarte, sowie als Schmuckund Werbeträger dienen. Die Umhüllung kann darüber hinaus jedoch auch aus einem durchsichtigen oder wenigstens teilweise durchscheinenden Material, insbesondere Kunststoffmaterial hergestellt sein, und auf diese Weise bei in die Umhüllung eingeführten Datenträger die optische Sicht auf die auf den Datenträger aufgebrachten Beschriftungen gewährleisten.

Von Vorteil kann weiterhin vorgesehen sein, daß das Koppelelement am Befestigungselement dauerhaft befestigt ist, und das Befestigungselement und der Datenträger für eine gegenseitig lösbare mechanische Verbindung ausgebildet bzw. angeordnet sind. Auf diese Weise wird bei aufgenommenem bzw. befestigtem Datenträger in bzw. auf dem Befestigungselement die positionsgerechte Lage des Koppelelementes bezüglich der elektronischen Schaltung sichergestellt, und dennoch eine möglichst einfach handzuhabende Verbindung bzw. Lösung von Datenträger und Koppelelement gewährleistet.

Eine weiterhin bevorzugte Ausführung der Erfindung zeichnet sich dadurch aus, daß das Befestigungselement aus Kunststoffmaterial hergestellt ist, und das Koppelelement insbesondere in Form von kunststoffgebundenen Magnetpartikel innerhalb des Befestigungselementes eingebracht ist. In einem solchen Fall kann auch das Befestigungselement hinsichtlich der Biegeeigenschaften die bei Chipkarten vorgesehenen Standardvorgaben erreichen.

Bei einer besonders bevorzugten Ausführung der Erfindung ist vorgesehen, daß das Befestigungselement in der Form einer Tasche zur wenigstens teilweise Aufnahme des Datenträgers ausgebildet ist, welche Tasche eine Grundplatte und eine die Grundplatte zumindest teilweise abdeckende Abdeckplatte besitzt, welche auf dem Randbereich der Grundplatte vermittels einer Abstützeinrichtung abgestützt ist. Hierbei kann die Abstützeinrichtung als im wesentlichen U-förmiger Abstandshalter und/oder in Form einzelner, auf dem Randbereich der Grundplatte verteilter und einen Abstand voneinander aufweisender Abstandsstege ausgebildet sein. Bei dieser Ausführung kann das Koppelelement entweder einseitig innerhalb nur einer Seitenwandung an einer vorbestimmten Position parallel zur Chipkarte eingebracht sein, oder zur weitergehenden Vergrößerung der effektiven Antennenwirkung zu beiden Seiten gegenüber der Chipkarte innerhalb des Befestigungselementes eingebracht sein.

Weitere Merkmale, Vorteile und Zweckmäßigkeiten der Erfindung ergeben sich aus der nachfolgenden Beschreibung von Ausführungsbeispielen anhand der Zeichnung. Es zeigt:
- Figur 1: eine schematische Gesamtansicht einer tragbaren Datenübertragungsvorrichtung mit einem Datenträger (kontaktlose Chipkarte) und einem das Koppelelement abstützenden Befestigungselement gemäß einem Ausführungsbeispiel der Erfindung;
- Figur 2: eine schematische Schnittansicht einer Datenübertragungsvorrichtung gemäß einem weiteren Ausführungsbeispiel; und
- Figur 3: eine schematische Schnittansicht einer Datenübertragungsvorrichtung gemäß einem weiteren Ausführungsbeispiel.

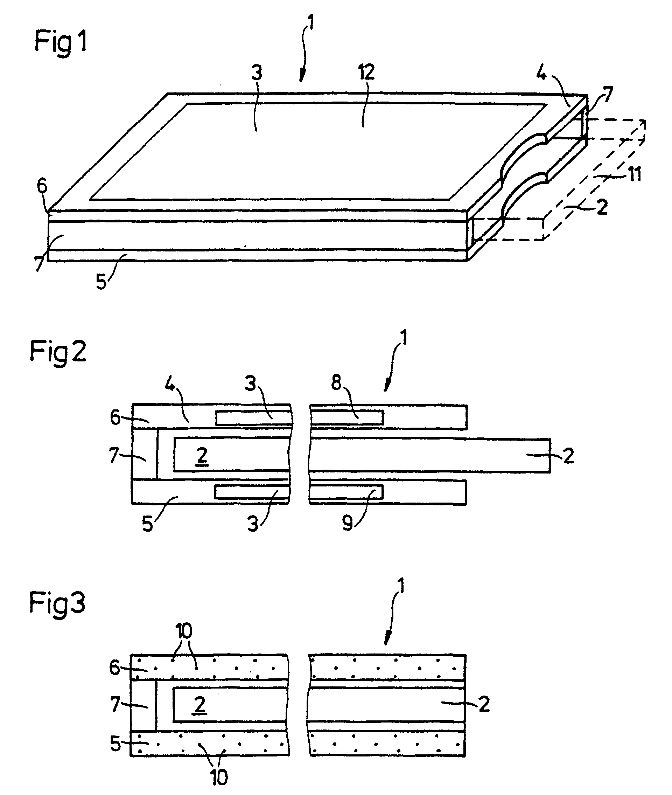

Die in den Figuren 1 bis 3 dargestellten Ausführungsbeispiele der Erfindung umfassen eine tragbare Datenübertragungsvorrichtung 1 zur kontaktlosen Übertragung von elektrischen Signalen bzw. Daten an eine (nicht näher dargestellte ortsfeste Lese-Schreibstation), mit einem Datenträger 2 in der Form einer handelsüblichen kontaktlosen Chipkarte und einem Koppelelement 3 aus einem Magnetwerkstoff. Die kontaktlose Chipkarte 2 umfaßt einen im Scheckkartenformat ausgebildeten Kartenkörper 11 aus Kunststoffmaterial, innerhalb welchen eine auf einem Halbleiterchip ausgebildete elektronische Schaltung mit einem Datenspeicher und eine elektrisch mit der Schaltung verbundene Induktionsspule integriert ausgebildet sind, wobei die Windungen der Induktionsspule unter Ausnutzung der maximalen Kartenfläche der Chipkarte 2 annähernd den äußeren Abmessungen des Kartenkörpers 11 entsprechende Ausdehnungen besitzen. Die Herstellung einer solchen kontaktlosen Chipkarte 2 mit integrierter Induktionsspule und Halbleiterchip ist dem Fachmann geläufig und braucht hier nicht näher ausgeführt zu werden.

Erfindungsgemäß ist ein den äußeren Abmessungen des Datenträgers 2 wenigstens teilweise angepaßtes Befestigungselement 4 vorgesehen, welches zum einen den Datenträger 2, und zum anderen das Koppelelement 3 in der vorbestimmten Lage bezüglich des Datenträgers 2 abstützt. Das Koppelelement 3 ist dauerhaft am Befestigungselement 4 befestigt bzw. eingebracht. In den bevorzugten Ausführungsbeispielen nach den Figuren 1 bis 3 stellt das Befestigungselement 4 eine Schutzhülle für die kontaktlose Chipkarte in der Form einer Tasche zur annähernd vollständigen (Figuren 1 und 2) oder vollständigen Aufnahme (Figur 3) des Datenträgers 2 dar, welche Tasche eine Grundplatte 5 und eine die Grundplatte 5 zumindest teilweise abdeckende Abdeckplatte 6 besitzt, welche auf dem Randbereich der Grundplatte 5 vermittels einer Abstützeinrichtung 7 abgestützt ist, wobei die Abstützeinrichtung 7 als im wesentlichen U-förmiger Abstandshalter ausgebildet ist. Der U-förmige Abstandshalter 7 ist auf dem Randbereich der Grundplatte 5 beispielsweise aufgeklebt, und die auf dem Abstandshalter aufgeklebte Abdeckfolie 6 so abgestützt, daß die Abdeckfolie 6 mit einem bestimmten Abstand von der Grundplatte 5 angeordnet ist. Das in den Figuren 1 bis 3 dargestellte Befestigungselement 4 ist somit an drei Seiten mittels der Abstützeinrichtung 7 abgeschlossen, und lediglich auf einer Seite offen. Die gegebenenfalls optisch durchsichtige Grundplatte 5 und die Abdeckplatte 6 bestehen jeweils aus einem biegsamen, mechanisch strapazierfähigen und maßhaltigen Kunststoff, wie beispielsweise Polykarbonat oder Polyester. Die Gesamtstärke der auch aus mehreren Einzelfolien bestehenden Abdeckplatte 6 beträgt beispielsweise 0,25 mm bis 2 mm. Die Stärke der Abstützeinrichtung 7 ist so gewählt, daß ein leichtes Einführen des Datenträgers 2 in das Befestigungselement 4 gewährleistet ist, also beispielsweise etwas mehr als 840 µm. Anstelle des U-förmigen Abstandshalters 7 kann die Abstützeinrichtung bei einem weiteren, nicht näher dargestellten Ausführungsbeispiel der Erfindung auch in Form einzelner, auf dem Randbereich der Grundplatte 5 verteilter Abstandsstege ausgebildet sein, wobei in diesem Fall das Befestigungselement 4 bei den drei Randbereichen nicht vollständig abgeschlossen ist, sondern eine Luftspalte zwischen Abdeckplatte 6 und Grundplatte 5 aufweist, so daß der Datenträger 2 noch einfacher in das Befestigungselement 4 einführbar ist. Bei einem weiteren, ebenfalls nicht näher dargestellten Ausführungsbeispiel eines Befestigungselementes gemäß der Erfindung besteht die Grundplatte aus demselben Material wie die Abdeckplatte. Ein derartiges Befestigungselement kann beispielsweise einfach so ausgebildet sein, daß eine einzige Abdeckplatte mit dem doppelten Flächenwert einer Chipkarte in der Mitte gefalzt wird und beispielsweise an drei Randseiten mittels des U-förmigen Abstandshalters, der Klebeflächen aufweist, zusammengeklebt. Bei einer weiteren Ausführungsform wird der leichteren Herstellung wegen ein am Randbereich der Grundplatte abgestützter Teil der Abdeckplatte als Abstützeinrichtung ausgebildet, so daß Abdeckplatte und Abstützeinrichtung aus einem Stück bestehen. Dabei kann der die Abstützeinrichtung bildende Randabschnitt der Abdeckplatte tiefgezogen, geprägt, gefalzt und geknickt, oder durch ein sonstiges Verfahren hergestellt sein.

Bei dem in Figur 1 dargestellten Ausführungsbeispiel ist innerhalb der Abdeckplatte 6 ein dünner, plattenförmiger Ferrit 12 eingearbeitet, dessen Grundfläche fast vollständig den entsprechenden äußeren Abmessungen des Datenträgers 2 entspricht. Die Abdeckplatte 6 besteht in diesem Fall aus zwei gleichflächigen Kunststofffolien, zwischen denen die Ferritplatte 12 eingesetzt ist, und die am Randbereich miteinander verschweißt sind.

Bei dem in Figur 2 dargestellten Ausführungsbeispiel sind sowohl in der Abdeckplatte 6, als auch in der Grundplatte 5 Ferritkörper 8 und 9 eingearbeitet, welche jeweils eine Stärke von beispielsweise etwa 0,5 mm bis 1 mm aufweisen.

Bei dem in Figur 3 darstellten Ausführungsbeispiel sind in den jeweils als Kunststoffolien mit einer Stärke von etwa 1 bis 2 mm ausgebildeten Grundplatte 5 und Abdeckplatte 6 jeweils Magnetpartikel 10 eingebunden.

## Patentansprüche

1. Tragbare Datenübertragungsvorrichtung zur Übertragung von elektrischen Signalen bzw. Daten an eine Lese-Schreibstation, mit einem Datenträger (2), in welchem eine elektronische Schaltung mit einem Datenspeicher integriert ausgebildet ist, und mit einem der elektronischen Schaltung zugeordneten Koppelelement (3), welches in einer vorbestimmten räumlichen Lage bezüglich der elektronischen Schaltung angeordnet bzw. abgestützt ist, wobei ein den äußeren Abmessungen des Datenträgers (2) wenigstens teilweise angepaßtes Befestigungselement (4) vorgesehen ist, welches zum einen den Datenträger (2), und zum anderen das Koppelelement (3) in der vorbestimmten Lage bezüglich des Datenträgers (2) abstützt, wobei
der Datenträger (2) eine kontaktlose Chipkarte mit einer im Kartenkörper der Chipkarte integriert ausgebildeten Induktionsspule darstellt, die mit der elektronischen Schaltung elektrisch verbunden ist, **dadurch gekennzeichnet, daß** Koppelelement (3) als Bestandteil des Befestigungselements ein der Induktionsspule zugeordnetes magnetisches Material für die Verbesserung der Lese- oder Schreibsicherheit bei Vorbeiführen der kontaktlosen Chipkarte an der Lese-Schreibstation, und Erhöhung des maximal möglichen Lese- oder Schreibabstandes aufweist.

2. Datenübertragungsvorrichtung nach Anspruch 1, **dadurch gekennzeichnet, daß** das Befestigungselement (4) als Umhüllung für den Datenträger (2) ausgebildet ist, und den Datenträger (2) wenigstens teilweise aufnimmt.

3. Datenübertragungsvorrichtung nach Anspruch 1 oder 2, **dadurch gekennzeichnet, daß** das Koppelelement (3) am Befestigungselement (4) dauerhaft befestigt ist, und das Befestigungselement (4) und der Datenträger (2) für eine gegenseitig lösbare mechanische Verbindung ausgebildet bzw. angeordnet sind.

4. Datenübertragungsvorrichtung nach einem der Ansprüche 1 bis 3, **dadurch gekennzeichnet, daß** das Befestigungselement (4) aus Kunststoffmaterial hergestellt ist, und das Koppelelement (3) insbesondere in Form von kunststoffgebundenen Magnetpartikel (10) innerhalb des Befestigungselementes (4) eingebracht ist.

5. Datenübertragungsvorrichtung nach einem der Ansprüche 1 bis 4, **dadurch gekennzeichnet, daß** das Befestigungselement (4) in der Form einer Tasche zur wenigstens teilweise Aufnahme des Datenträgers (2) ausgebildet ist, welche Tasche eine Grundplatte (5) und eine die Grundplatte (5) zumindest teilweise abdeckende Abdeckplatte (6) besitzt, welche auf dem Randbereich der Grundplatte (5) vermittels einer Abstützeinrichtung (7) abgestützt ist.

6. Datenübertragungsvorrichtung nach Anspruch 5, **dadurch gekennzeichnet, daß** die Abstützeinrichtung (7) als im wesentlichen U-förmiger Abstandshalter und/oder in Form einzelner, auf dem Randbereich der Grundplatte (5) verteilter und einen Abstand voneinander aufweisender Abstandsstege ausgebildet ist.

7. Datenübertragungsvorrichtung nach Anspruch 5 oder 6, **dadurch gekennzeichnet, daß** das Koppelelement (3) in der Grundplatte (5) oder in der Abdeckplatte (6), oder in beiden eingebracht ist.

8. Befestigungselement mit einem durch dieses abgestützten Koppelelement (3) für eine kontaktlose Chipkarte (2), in der eine elektronische Schaltung mit einem Datenspeicher und eine Induktionsspule integriert ausgebildet ist, die mit der elektronischen Schaltung elektrisch verbunden ist, wobei gilt:
- das Befestigungselement weist eine Grundplatte (5) und eine die Grundplatte (5) zumindest teilweise abdeckende Abdeckplatte (6) auf, welche auf dem Randbereich der Grundplatte (5) durch eine Abstützeinrichtung (7) abgestützt ist,
- das Koppelelement (3) weist ein der Induktionsspule zugeordnetes magnetisches Material auf, und
- das Koppelelement (3) ist in der Grundplatte (5) oder der Abdeckplatte (6), oder in beiden eingebracht, und zwar in einer vorbestimmten räumlichen Lage entsprechend der elektronischen Schaltung nach Aufnahme der kontaktlosen Chipkarte (2) in der Weise, daß das Koppelelement (3) mit der Induktionsspule der aufgenommenen kontaktlosen Chipkarte (2) derart zusammenwirken kann, daß eine Erhöhung des maximal möglichen Lese-/Schreibabstandes zu einer Lese-/Schreibstation bewirkt wird.

9. Befestigungselement nach Anspruch 8, **dadurch gekennzeichnet, daß** die Abstützeinrichtung (7) als im wesentlichen U-förmiger Abstandshalter und/oder in Form einzelner, auf dem Randbereich der Grundplatte (5) verteilter und einen Abstand voneinander aufweisender Abstandsstege ausgebildet ist.

10. Befestigungselement nach Anspruch 8 oder 9, **dadurch gekennzeichnet, daß** das Befestigungselement (4) aus Kunststoffmaterial hergestellt ist, und das Koppelelement (3) insbesondere in Form von kunststoffgebundenen Magnetpartikeln innerhalb des Befestigungselementes (4) eingebracht ist.

11. Befestigungselement nach Anspruch 8 bis 10, **dadurch gekennzeichnet, daß** das Befestigungselement (4) als Umhüllung für den Datenträger (2) ausgebildet ist, und den Datenträger (2) wenigstens teilweise aufnimmt.

12. Befestigungselement nach Anspruch 8 bis 11, **dadurch gekennzeichnet, daß** das Koppelelement (3) am Befestigungselement (4) dauerhaft befestigt ist, und das Befestigungselement (4) und der Datenträger (2) für eine gegenseitig lösbare mechanische Verbindung ausgebildet bzw. angeordnet sind.

## Claims

1. Portable data transmission device for the transmission of electrical signals and/or data to a read-write station, having a data medium (2) in which an electronic circuit with a data memory is integrated, and having a coupling element (3), which is assigned to the electronic circuit and is arranged or supported in a predetermined spatial position with regard to the electronic circuit, a fixing element (4) being provided, which is at least partially matched to the outer dimensions of the data medium (2) and supports the data medium (2), on the one hand, and the coupling element (3), on the other hand, in the predetermined position with regard to the data medium (2), wherein the data medium (2) constitutes a contactless smart card having an induction coil which is integrated in the card body of the smart card and is electrically connected to the electronic circuit, **characterized in that** [lacuna] coupling element (3) as a constituent of the fixing element has a magnetic material, assigned to the induction coil, for improving the reading or writing security when the contactless smart card is guided past the read-write station and increasing the maximum possible reading or writing distance.

2. Data transmission device according to Claim 1, **characterized in that** the fixing element (4) is designed as an encapsulation for the data medium (2) and at least partially accommodates the data medium (2).

3. Data transmission device according to Claim 1 or 2, **characterized in that** the coupling element (3) is permanently fixed to the fixing element (4), and the fixing element (4) and the data medium (2) are designed or arranged for a mutually releasable mechanical connection.

4. Data transmission device according to one of Claims 1 to 3, **characterized in that** the fixing element (4) is produced from plastic material, and the coupling element (3) is incorporated in particular in the form of plastic-bound magnetic particles (10) within the fixing element (4).

5. Data transmission device according to one of Claims 1 to 4, **characterized in that** the fixing element (4) is designed in the form of a pocket for at least partially accommodating the data medium (2), which pocket has a baseplate (5) and a covering plate (6), which at least partially covers the baseplate (5) and is supported on the edge region of the baseplate (5) by means of a supporting facility (7).

6. Data transmission device according to Claim 5, **characterized in that** the supporting facility (7) is designed as an essentially U-shaped spacer and/or in the form of individual spacer webs which are distributed on the edge region of the baseplate (5) and are spaced apart from one another.

7. Data transmission device according to Claim 5 or 6, **characterized in that** the coupling element (3) is incorporated in the baseplate (5) or in the covering plate (6) or in both.

8. Fixing element having a coupling element (3) for a contactless smart card (2), said coupling element being supported by said fixing element, in which smart card an electronic circuit with a data memory and an induction coil are integrated, said induction coil being electrically connected to the electronic circuit, where the following hold true:
- the fixing element has a baseplate (5) and a covering plate (6), which at least partially covers the baseplate (5) and is supported on the edge region of the baseplate (5) by a supporting facility (7),
- the coupling element (3) has a magnetic material assigned to the induction coil, and
- the coupling element (3) is incorporated in the baseplate (5) or the covering plate (6) or in both, to be precise in a predetermined spatial position corresponding to the electronic circuit after accommodation of the contactless smart card (2) such that the coupling element (3) can interact with the induction coil of the received contactless chip card (2) such that an increase in the maximum possible read/write distance to a read/write station is brought about.

9. Fixing element according to Claim 8, **characterized in that** the supporting facility (7) is designed as an essentially U-shaped spacer and/or in the form of individual spacer webs which are distributed on the edge region of the baseplate (5) and are spaced apart from one another.

10. The fixing element according to Claim 8 or 9, **characterized in that** the fixing element (4) is produced from plastic material, and the coupling element (3) is incorporated in particular in the form of plastic-bound magnetic particles within the fixing element (4).

11. The fixing element according to Claims 8 to 10, **characterized in that** the fixing element (4) is designed as an encapsulation for the data medium (2) and at least partially accommodates the data medium (2).

12. The fixing element according to Claims 8 to 11, **characterized in that** the coupling element (3) is permanently fixed to the fixing element (4), and the fixing element (4) and the data medium (2) are designed or arranged for a mutually releasable mechanical connection.

## Revendications

1. Dispositif portatif de transmission de données, destiné à la transmission de signaux électriques ou de données à un poste de lecture-écriture, comprenant un support (2) de données, dans lequel est constitué de manière intégrée, un circuit électronique ayant une mémoire de données et un élément (3) de couplage qui est associé au circuit électronique, et qui est monté ou supporté dans une position dans l'espace déterminé à l'avance, par rapport au circuit électronique, dans lequel il prévu un élément (4) de fixation qui est adapté au moins en partie aux dimensions extérieures du support (2) de données, et qui supporte d'une part, le support (2) de données et d'autre part, l'élément (3) de couplage en la position déterminée à l'avance par rapport au support de données, dans lequel le support (2) de données est une carte à puce sans contact, ayant une bobine d'induction constituée de manière intégrée dans le corps de la carte à puce et reliée électriquement au circuit électronique, **caractérisé en ce que** l'élément (3) de couplage a en tant que partie constitutive de l'élément de fixation, un matériau magnétique associé à la bobine d'induction, pour l'amélioration de la sécurité de lecture ou d'écriture lors du passage de la carte à puce sans contact devant le poste de lecture-écriture et pour l'augmentation de l'intervalle maximum possible de lecture ou d'écriture.

2. Dispositif de transmission de données selon la revendication 1, **caractérisé en ce que** l'élément (4) de fixation est constitué en étui pour le support (2) de données et reçoit au moins en partie le support (2) de données.

3. Dispositif de transmission de données suivant la revendication 1 ou 2, **caractérisé en ce que** l'élément (3) de couplage est fixé de manière permanente à l'élément (4) de fixation, et l'élément (4) de fixation et le support (2) de données sont constitués ou disposés pour une liaison mécanique amovible mutuelle.

4. Dispositif de transmission de données suivant l'une des revendications 1 à 3, **caractérisé en ce que** l'élément (4) de fixation est en matière plastique, et l'élément (3) de couplage est incorporé notamment sous la forme de particules (10) d'aimants liées par de la matière plastique, au sein de l'élément (4) de fixation.

5. Dispositif de transmission de données suivant l'une des revendications 1 à 4, **caractérisé en ce que** l'élément (4) de fixation est constitué sous la forme d'une poche de réception au moins en partie du support (2) de données, poche qui a une plaque (5) de base et une plaque (6) de couverture recouvrant au moins en partie la plaque (5) de base et s'appuyant sur la partie marginale de la plaque (5) de base, au moyen d'un dispositif (7) d'appui.

6. Dispositif de transmission de données suivant la revendication 5, **caractérisé en ce que** le dispositif (7) d'appui est constitué sous la forme d'une entretoise sensiblement en forme de U et/ou sous la forme de barrettes de maintien à distance, réparties sur la partie marginale de la plaque (5) de base et à distance les unes des autres.

7. Dispositif de transmission de données suivant la revendication 5 ou 6, **caractérisé en ce que** l'élément (3) de couplage est incorporé à la plaque (5) de base ou à la plaque (6) de couverture ou dans les deux.

8. Elément de fixation comprenant soutenu par celui-ci, un élément (3) de couplage pour une carte (2) à puce sans contact, dans laquelle est constitué de manière intégré, un circuit électronique ayant une mémoire de données et une bobine d'induction qui est reliée électriquement au circuit électronique, dans lequel :
- l'élément de fixation a une plaque (5) de base et une plaque (6) de couverture recouvrant au moins en partie la plaque (5) de base, et s'appuyant sur la partie marginale de la plaque (5) de base par un dispositif (7) d'appui,
- l'élément (3) de couplage comporte un matériau magnétique associé à la bobine d'induction, et
- l'élément (3) de couplage est incorporé à la plaque (5) de base ou à la plaque (6) de couverture ou aux deux, et cela en une position dans l'espace déterminée à l'avance correspondant au circuit électronique après réception de la carte (2) à puce sans contact, de façon à ce que l'élément (3) de couplage puisse coopérer avec la bobine d'induction de la carte (2) à puce sans contact en position de réception, de manière à provoquer une augmentation de distance maximum possible de lecture/d'écriture à un poste de lecture/écriture.

9. Elément de fixation suivant la revendication 8, **caractérisé en ce que** le dispositif (7) d'appui est constitué sous la forme d'une entretoise sensiblement en forme de U et/ou sous la forme de nervures de mise à distance, réparties sur la partie marginale de la plaque (5) de base et à distance les unes des autres.

10. Elément de fixation suivant la revendication 8 ou 9, **caractérisé en ce que** l'élément (4) de fixation est en matière plastique et l'élément (3) de couplage est incorporé notamment sous la forme de particules magnétiques liées par de la matière plastique, au sein de l'élément (4) de fixation.

11. Elément de fixation suivant les revendications 8 à 10, **caractérisé en ce que** l'élément (4) de fixation est constitué en étui pour le support (2) de données et reçoit au moins en partie le support (2) de données.

12. Elément de fixation suivant les revendications 8 à 11, **caractérisé en ce que** l'élément (3) de couplage est fixé de manière permanente à l'élément de fixation, et l'élément (4) de fixation et le support (2) de données sont constitués ou disposés pour une liaison mécanique amovible mutuelle.
